(19) Europäisches Patentamt
European Patent Office
Office européen des brevets

(11) **EP 3 350 013 B1**

(12) **EUROPÄISCHE PATENTSCHRIFT**

(45) Veröffentlichungstag und Bekanntmachung des Hinweises auf die Patenterteilung:
**27.11.2019  Patentblatt 2019/48**

(21) Anmeldenummer: **16763014.4**

(22) Anmeldetag: **06.09.2016**

(51) Int Cl.:
**B60K 37/06** *(2006.01)*          **B60K 35/00** *(2006.01)*
**G06F 3/01** *(2006.01)*          **G05G 5/03** *(2008.04)*

(86) Internationale Anmeldenummer:
**PCT/EP2016/070989**

(87) Internationale Veröffentlichungsnummer:
**WO 2017/045975 (23.03.2017 Gazette 2017/12)**

(54) **BEDIENEINHEIT FÜR EIN FAHRZEUG**

CONTROL UNIT FOR A VEHICLE

UNITÉ DE COMMANDE POUR UN VÉHICULE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **15.09.2015  DE 102015217660**

(43) Veröffentlichungstag der Anmeldung:
**25.07.2018  Patentblatt 2018/30**

(73) Patentinhaber: **Behr-Hella Thermocontrol GmbH 70469 Stuttgart (DE)**

(72) Erfinder:
 • **PANKRATZ, Harri**
   **59505 Bad Sassendorf (DE)**
 • **BESCHNITT, Alexander**
   **59557 Lippstadt (DE)**

(74) Vertreter: **dompatent von Kreisler Selting Werner - Partnerschaft von Patent- und Rechtsanwälten mbB**
**Deichmannhaus am Dom**
**Bahnhofsvorplatz 1**
**50667 Köln (DE)**

(56) Entgegenhaltungen:
**DE-A1-102013 006 414     DE-B3-102012 221 107**
**US-A1- 2014 218 324**

## Beschreibung

Die Erfindung betrifft eine Bedieneinheit für ein Fahrzeug, bei der es sich beispielsweise um ein Infotainment-System zur Steuerung diverser Fahrzeugkomponenten handeln kann.

Bedieneinheiten mit Display-Baugruppen, auf denen beispielsweise menügesteuert verschiedene Symbolfelder darstellbar sind, über die Funktionen für eine Fahrzeugkomponente ausgewählt werden können, erfreuen sich zunehmender Beliebtheit. Dabei soll dem Bediener die Auswahl einer Funktion taktil bestätigt werden, was beispielsweise durch eine zusätzliche aktive Bewegung des Bedienelements nach dessen Betätigung erfolgt. Dieses haptische Feedback soll, über die gesamte Bedienoberfläche des Bedienelements betrachtet, möglichst homogen sein.

Aus DE-A-10 2008 035 907 ist ein berührungsempfindliches Eingabegerät mit in vertikaler Richtung federelastisch gelagertem Bedienelement bekannt. In DE-A-10 2009 007 243 ist ein lateral federelastisch gelagertes Bedienelement eines Eingabegeräts bekannt. Ferner ist in DE-A-100 43 805 ein elektromechanischer Aktuator für die Ventilsteuerung einer Verbrennungskraftmaschine offenbart, wobei der Aktuator mit einer Messspule versehen ist.

Aus DE-B-10 2012 221 107 und DE-A-10 2013 006 414 ist jeweils eine Bedienvorrichtung mit einer Bedienleiste bekannt, die bei Betätigung vibriert, indem sie mittels eines Aktuators impulsartig zur Seite bewegt wird.

US-A-2014/0218324 beschreibt ein berührungsempfindliches Interface mit einem Betätigungselement, unterhalb dessen ein Aktuator angeordnet ist, der das Betätigungselement bei einer Berührung mechanisch anregt, und zwar durch aktive impulsartige Bewegung des Bedienelements orthogonal zur Bedienoberfläche des Bedienelements.

Aufgabe der Erfindung ist es, eine Bedieneinheit für ein Fahrzeug zu schaffen, die mit mindestens einem Bedienelement mit Bedienoberfläche versehen ist, wobei das haptische Empfinden unabhängig vom Ort, an dem die Bedienoberfläche berührt und betätigt wird, im Wesentlichen gleich sein soll, und die mit einem aktiven haptischen Feedback ausgerüstet ist.

Zur Lösung dieser Aufgabe wird mit der Erfindung eine Bedieneinheit für ein Fahrzeug vorgeschlagen, wobei die Bedieneinheit versehen ist mit den Merkmalen des Anspruchs 1. Einzelne Ausgestaltungen der Erfindung sind Gegenstand der Unteransprüche.

Nach der Erfindung wird das aktive haptische Feedback einer Betätigung des Bedienelements durch eine im spitzen Winkel zur Bedienoberfläche des Bedienelements verlaufende erzwungene Bewegung realisiert, die demzufolge eine laterale und eine vertikale, also zur Bedienoberfläche normale, Komponente aufweist. Zur Betätigung wird das Bedienelement in einer im Wesentlichen orthogonal zur Bedienoberfläche verlaufenden Vertikalbewegungsachse bewegt. Wird dann über einen Sensor diese Betätigungsbewegung erfasst, erfolgt eine aktive Bewegung des Bedienelements mit einer Lateralbewegungsrichtungskomponente (beispielsweise nach links oder rechts, nach oben oder nach unten). Dabei ist darauf zu achten, dass das Bedienelement nicht verkippt, was aber ohne besondere Maßnahmen dann nahezu ausgeschlossen ist, wenn, wie es der Normalfall ist, der Aktuator nicht im Massenschwerpunkt des Bedienelements mit diesem verbunden ist. Das Bedienelement umfasst im Wesentlichen ein Display mit entsprechender Anzeigetechnik und -technologie (beispielsweise LCD-Display) und Hinterleuchtung, so dass es eine nicht unbeträchtliche Bautiefe aufweisen kann. Da der Aktuator im Idealfall allenfalls direkt unterhalb dieses Bedienelements angeordnet sein kann, greift sein Antriebselement zur aktiven Haptik-Rückmeldebewegung in Lateralbewegungsrichtung außerhalb des Massenschwerpunkts des Bedienelements an diesen an. Hierdurch kommt es dann ohne entsprechende Maßnahmen zwangsweise zu einer Verkippung des Bedienelements, was unerwünscht ist. Bekannte Lösungen zielen auf eine Zwangsführung mit entsprechender Auslegung des Federsystems ab, mit dem das Bedienelement am Gehäuse der Bedieneinheit gelagert ist. All dies ist mechanisch aufwendig.

Daher sieht die Erfindung vor, das Bedienelement und den Aktuator mechanisch derart relativ zueinander ausgerichtet anzuordnen, dass der Massenschwerpunkt des Bedienelements auf der Wirkbewegungsachse des Antriebselements liegt. Auf der Verlängerung der Wirkbewegungsachse des Antriebselements liegt also der Massenschwerpunkt des Bedienelements. Die Wirkbewegungsachse des Antriebselements verläuft dabei also in einem spitzen Winkel zur beabsichtigten Lateralbewegungsrichtung für das aktive haptische Feedback. Indem das Bedienelement also längs der Wirkbewegungsachse des Antriebselements bewegt wird, weist die Feedbackbewegung des Bedienelements neben der beabsichtigten Lateralbewegungskomponente auch eine Vertikalbewegungskomponente auf, was aber nicht weiter störend ist. Vielmehr entscheidend ist, dass die Bedienoberfläche des Bedienelements beim aktiven haptischen Feedback ihre Ausrichtung im Raum beibehält, also eine schräg gerichtete Parallelverschiebung erfährt.

Grundsätzlich gilt also, dass auf Grund der Anregung des Bedienelements für die haptische Rückmeldung die resultierende Bewegung des Bedienelements in Form einer lateralen Hauptbewegung und einer zur Bedienoberfläche normalen Nebenbewegung erfolgt. Je nach Anstellwinkel der Anregung kann die Normalbewegungskomponente in ihrer Größe variieren. Es findet also im Regelfall keine reine Lateralbewegung statt.

Durch die erfindungsgemäße Maßnahme ist es möglich, die aktive haptische Feedback-Bewegung rein translatorisch auszuführen, indem die Wirkrichtung des Antriebselements durch den Massenschwerpunkt des Bedienelements verläuft.

Rotatorische Bewegungsanteile beim aktiven haptischen Feedback des Bedienelements werden weiter reduziert, indem die Rückholfederelemente, mit deren Hilfe das Bedienelement nach einem aktiven haptischen Feedback wieder in die Ausgangsposition zurück bewegt werden, in einer gemeinsamen Ebene mit dem Massenschwerpunkt des Bedienelements liegen. Hierbei fallen die Federwirkachsen mit der Wirkbewegungsachse des Antriebselements des Aktuators auf zusammen. Wäre dies nicht der Fall, so würde das Muster der aktiven haptischen Feedbackbewegung des Bedienelements rotatorische Anteile aufweisen. Aus Bauraumgründen werden die Federwirkachsen typischerweise parallel zur Wirkbewegungsachse des Antriebselements des Aktuators verlaufen, und zwar beidseitig dieser Wirkbewegungsachse, wodurch ungewollte Momente, die auf das Bedienelement bei dessen Rückbewegung in die Ausgangsposition wirken könnten, weitestgehend neutralisiert sind.

Ferner ist es vorteilhaft, die Haptik aktiv in Hin- und Rückweg zu steuern oder zu regeln. Hierfür ist es mitentscheidend, dass die Bewegung des Bedienelements möglichst rein translatorisch ist, was durch den erfindungsgemäßen Ansatz realisierbar ist. Ferner lässt sich durch den erfindungsgemäßen Ansatz im Wesentlichen sicherstellen, dass das haptische Empfinden unabhängig vom Betätigungsort auf der Bedienoberfläche immer gleich ist. Aufwendige konstruktive Lösungen zur federnden Lagerung des Bedienelements dergestalt, dass dieses eine reine translatorische Bewegung ausführt, sind nach der Erfindung nicht mehr erforderlich.

Zweckmäßig ist es, wenn die Lateralbewegungsachse des Bedienelements und die Wirkbewegungsachse des Antriebselements des Aktuators eine gemeinsame, im Wesentlichen orthogonal zur Bedienoberfläche stehende Vertikalebene aufspannen.

In weiterer Ausgestaltung der Erfindung kann vorgesehen sein, dass das Gehäuse unterhalb des Bedienelements einen Bauraum aufweist und dass der Aktuator zur Erzielung eines kleinstmöglichen Winkels zwischen der Wirkbewegungsachse des Antriebselements des Aktuators und der Lateralbewegungsachse des Bedienelements so nah wie bauraumbedingt möglich unterhalb des Bedienelements und/oder soweit wie bauraumbedingt möglichst weit von dem Massenschwerpunkt des Bedienelements entfernt angeordnet ist. Je kleiner der Winkel zwischen der Wirkbewegungsachse des Aktuators und der Lateralbewegungsachse des Bedienelements ist, desto größer ist der Lateralbewegungsanteil des Bedienelements in Relation zum Lateralbewegungsanteil bei der Feedback-Bewegung.

Bei einer weiteren Ausgestaltung der Erfindung weist die Bedieneinheit beidseitig des Bedienelements angeordnete Rückholfederelemente für das Bedienelement mit Federwirkachsen auf, die auf der Lateralbewegungsachse liegen oder die in einer Ebene, die im Wesentlichen orthogonal zur von der Wirkbewegungsachse des Antriebselements des Aktuators und der Lateralbewegungsachse des Bedienelements aufgespannten Ebene ist, liegen sowie symmetrisch zur Lateralbewegungsachse angeordnet sind.

Ferner kann vorgesehen sein, dass der Aktuator als Zuganker-Elektromagnet mit einem ersten Stator, der eine erste Erregerspule aufweist, und mit einem Anker als Antriebselement ausgebildet ist, dass der Anker mit einer Messspule versehen ist, an der eine Messspannung anliegt, wenn der Anker von einem durch die erste Erregerspule erzeugten Magnetfluss durchdrungen wird, und dass die erste Erregerspule und die Messspule mit der Auswerte- und Ansteuereinheit verbunden sind, wobei mittels der Auswerte- und Ansteuereinheit die Kraft steuerbar und/oder regelbar ist, mit der das Antriebselement des Aktuator in Richtung auf den ersten Stator zu bewegbar ist und/oder die Auslenkbewegung des Antriebselements aus dessen Ruheposition sowie die Zurückbewegung des Antriebselements in dessen Ruheposition steuerbar und/oder regelbar ist.

Hierbei wird vorteilhafterweise eine relativ genaue und kostengünstige Kraftmessung in einem als Elektromagneten ausgeführten Aktuator für das haptische Feedback von Bedienelementen ermöglicht. Dabei kann der Elektromagnet als Einfach-Zuganker oder als Doppel-Zuganker ausgeführt sein.

Aus Bauraum- und Kostengründen wird für das haptische Feedback oftmals ein Elektromagnet (Zugankermagnet) ohne Permanentmagnete als Aktuator eingesetzt. Der Stator eines derartigen Zugankermagnets ist also elektromagnetisch zu betreiben. Um die gewünschte Bewegung der Bedienoberfläche des Bedienelements einstellen zu können, muss der zeitliche Kraftverlauf am Aktuator genau einstellbar sein. Desweiteren kann es erforderlich sein, dass die Kraft, mit der das Bedienelement vor- und zurückbewegt wird, jeweils aktiv aufgebaut wird. Dies kann mittels eines Doppel-Zugankermagnets mit einem gemeinsamen Zuganker zwischen zwei elektromagnetischen Statoren realisiert werden.

Die Kraft eines Elektromagneten hängt bei langsam veränderlichen Magnetfeldern im Wesentlichen vom Ankerstrom und vom Luftspalt zwischen Zuganker und Stator ab. Der Kraftverlauf im Falle des haptischen Feedbacks ist jedoch sehr dynamisch und umfasst Frequenzanteile oberhalb von 1 kHz. Hierbei ist der Zusammenhang zwischen Strom und Kraft bei üblich verwendeten Automatenstählen oder Elektroblechen zur Magnetflussführung nicht trivial und nur durch eine sehr aufwendige Modellierung beschreibbar. Hinzu kommt noch, dass der Luftspalt wegen der mechanischen Toleranzen und der Bewegung der Bedienoberfläche nicht genau bekannt ist, weshalb die Kraftwirkung eines Zugankermagnets nur grob abschätzbar ist.

Mit dem hier beschriebenen Ansatz der Messung des den Zuganker durchziehenden Magnetflusses mittels einer Messspule und der an dieser abfallenden induzierten Spannung lässt sich nun die Kraft und die Bewegung des Zugankers steuern bzw. regeln. Auch lässt sich nun die Bewegung des Zugankers gezielt dämpfen, so dass ein Überschwingen in der jeweiligen Endlage der Vor- und Zurückbewegung des Zugankers vermieden werden kann.

Wie bereits oben dargelegt, ist es von weiterem Vorteil, wenn der Zuganker zwischen zwei elektromagnetisch betriebenen Statoren angeordnet ist. Bei dieser Ausführungsform der Erfindung weist der Zuganker also einen zweiten Stator mit einer zweiten Erregerspule auf, wobei die beiden Statoren beidseitig des Ankers angeordnet sind und auch die zweite Erregerspule mit der Auswerte- und Ansteuereinheit verbunden ist, wobei mittels der Auswerte- und Ansteuereinheit die jeweilige Kraft, mit der das Antriebselement in die jeweilige Richtung auf den ersten bzw. zweiten Stator zu bewegbar ist, und/oder die Auslenkbewegung des Antriebselements aus dessen Ruheposition sowie die Zurückbewegung des Antriebselements in dessen Ruheposition steuerbar und/oder regelbar ist.

Die Erfindung wird nachfolgend anhand eines Ausführungsbeispiels und unter Bezugnahme auf die Zeichnung näher erläutert. Im Einzelnen zeigen:

Fig. 1 schematisch und in Seitenansicht eine Bedieneinheit für eine Fahrzeugkomponente mit als Displayelement ausgeführtem Bedienelement und federelastischer Lagerung sowie aktivem haptischen Feedback zur Betätigung des Bedienelements,

Fig. 2 eine Darstellung eines Elektromagneten, ausgebildet als Zugankermagnet mit Stator und Anker zur grundsätzlichen Erläuterung der elektromagnetisch relevanten Eigenschaften eines derartigen Elektromagneten,

Fig. 3 eine perspektivische Darstellung des als Doppelelektromagnet ausgebildeten Aktuators für die aktive haptische Rückmeldung und

Fig. 4 eine mögliche Beschaltung des Elektromagneten gemäß Fig. 3.

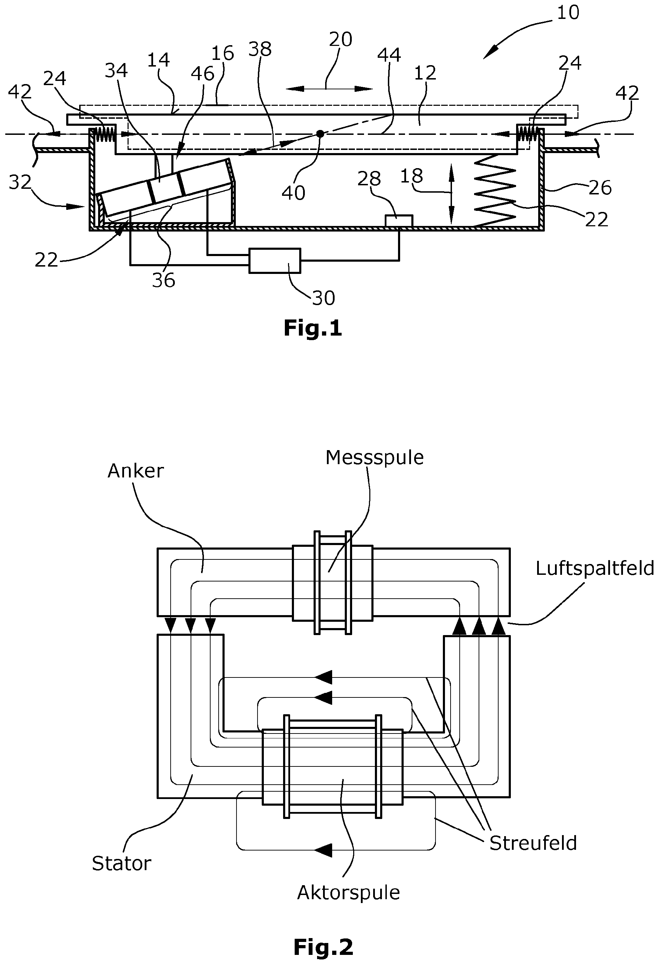

In Fig. 1 ist in Seitenansicht und schematisch eine Bedieneinheit 10 gezeigt, die ein Bedienelement 12 aufweist. Das Bedienelement 12 ist in diesem Ausführungsbeispiel als Display-Baugruppe mit einer Bedienoberfläche 14 ausgeführt, auf der eine Vielzahl von Symbolfeldern 16 darstellbar ist. Das Bedienelement 12 ist im Regelfall hinterleuchtet.

Zur Ausführung einer Betätigungsbewegung in Vertikalbewegungsrichtung (siehe den Doppelpfeil 18) sowie zur Bestätigung einer derartigen Betätigungsbewegung in lateraler Richtung (siehe den Doppelpfeil 20 in Fig. 1) ist das Bedienelement 12 über erste Federn 22 sowie zweite Federn 24 elastisch an einem Gehäuse 26 gelagert. Mittels eines Sensors 28 lässt sich feststellen, dass sich das Bedienelement längs der Vertikalbewegungsachse 18 bewegt hat. Dies wird in einer Auswerte- und Ansteuereinheit 30 ermittelt, woraufhin diese einen als Elektromagneten ausgeführten Aktuator 32 ansteuert, der ein Antriebselement 34 aufweist. Der feststehende Statorteil 36 des Aktuators 32 stützt sich am Gehäuse 26 ab, während das Antriebselement 34 des Aktuators 32 mechanisch mit dem Bedienelement 12 gekoppelt ist. Die Wirkbewegungsachse des Antriebselements 34 ist anhand des Doppelpfeils 38 dargestellt.

Je größer und aufwendiger das Bedienelement 12 konstruiert ist, umso schwerer ist es und umso mehr Bauraum nimmt es ein. Wenn nun gefordert wird, dass das haptische Feedback über die gesamte Bedienoberfläche 14 betrachtet gleich sein soll, so sollte das Bedienelement 12 beim haptischen Feedback ausschließlich eine translatorische Bewegung vollführen. Theoretisch gelingt dies in einfachster Weise dadurch, dass das Antriebselement 34 des Aktuators 32 im Massenschwerpunkt 40 des Bedienelements 12 angreift. Dies ist aber aufgrund der Bauraumgegebenheiten nicht möglich.

Will man nun dennoch erreichen, dass sich das Bedienelement 12 beim aktiven haptischen Feedback ausschließlich translatorisch bewegt, so besteht eine konstruktiv vergleichsweise einfache Lösung darin, den Aktuator 32 derart anzuordnen, dass der Massenschwerpunkt 40 des Bedienelements 12 auf der Wirkbewegungsachse 38 des Antriebselements 34 des Aktuators 32 liegt. Dies ist in Fig. 1 gezeigt, wobei in Fig. 1 auch dargestellt ist, wie sich das Bedienelement 12 aktiv bewegt, wenn eine Betätigungsbewegung erkannt und die Betätigung des Bedienelements 12 durch haptisches Feedback rückbestätigt wird. Hierbei ist noch zu bemerken, dass die zweiten Federelemente 24 bzw. deren Federwirkachsen 42 idealerweise in einer Ebene liegen, in der sich auch der Massenschwerpunkt 40 befindet und in der die Wirkbewegungsachse 38 des Aktuators 32 liegt, wobei die Wirkachsen des Aktuators 32 und der zweiten Federn 24 auf einer gemeinsamen Linie liegen.

Im Wesentlichen orthogonal zu dieser Ebene 44 verläuft diejenige Ebene, die durch die Lateralbewegungsachse 20 des Bedienelements 12 und die Wirkbewegungsachse 38 des Antriebselements 34 des Aktuators 32 aufgespannt wird. Bei dieser Ebene handelt es sich bezogen auf Fig. 1 um die Zeichnungsebene.

Die rein translatorische Bewegung des Bedienelements 12 beim aktiven haptischen Feedback weist also sowohl eine Lateral- als auch eine Vertikalkomponente auf. Dass diese Feedbackbewegung nicht rein lateral ist, spielt dafür, dass das haptische Empfinden über die gesamte Bedienoberfläche 14 des Bedienelements 12 gleich sein soll, keine Rolle. Entscheidend ist, dass das Bedienelement 12 beim aktiven haptischen Feedback keinerlei rotatorische Bewegungsanteile erfährt, es also insoweit zu einer Parallelverschiebung des Bedienelements 12 im Raum kommt.

Wie bereits weiter oben beschrieben, setzt man aus insbesondere Bauraum- und Kostengründen für das haptische Feedback von Bedienelementen oftmals als Aktuator einen Elektromagneten ein. Die von diesem Elektromagneten aufgebrachte Kraft kann nur mit erhöhtem Aufwand abgeschätzt werden und hängt ganz wesentlich vom Strom und Luftspalt des Elektromagneten ab. Die insoweit geltenden Gegebenheiten bei einem Elektromagneten sollen nachfolgend anhand von Fig. 2 verdeutlicht werden.

In Fig. 2 ist ein Elektromagnet dargestellt, dessen Stator und Anker aus hochpermeablen Materialien (üblicherweise Automatenstahl oder Elektroblech) besteht, und dessen Magnetfeld mittels einer bestromten Erregerspule aufgebaut wird.

Die Kraft eines solchen Elektromagneten wird üblicherweise aus dem Erregerstrom und der Luftspaltgröße berechnet. Der Kraftverlauf im Falle des haptischen Feedbacks ist jedoch sehr dynamisch mit Frequenzanteilen oberhalb von 1 kHz. Hierbei ist der Zusammenhang zwischen Strom und Kraft bei üblich verwendeten Automatenstählen oder Elektroblechen zur Magnetflussführung nicht trivial und nur durch eine sehr aufwendige Modellierung beschreibbar. Dazu kommt noch, dass der Luftspalt wegen der mechanischen Toleranzen und der Bewegung der Bedienoberfläche nicht genau bekannt ist, und somit die Kraftwirkung des Aktuators nur grob abschätzbar ist. Unter Verwendung der "Maxwellschen Zugkraftformel" und einer Messspule zur Ermittlung der magnetischen Flussdichte im Luftspalt kann dieses Problem umgangen werden, wobei eine Spannungsmessung in aller Regel kostengünstiger gestaltet werden kann als eine Strommessung:

$$F = \frac{B_L^2 A_L}{2\mu_0}$$

($F$ - Aktuatorkraft, $\mu_0$ - Permeabilität der Luft, $A_L$ - Luftspaltfläche, $B_L$ - Magnetflussdichte im Luftspalt)

Die relativ geringe Inhomogenität der Luftspaltflussdichte in praktischen Ausführungen kann durch einen Korrekturfaktor berücksichtigt werden, was wiederum zu einer einfachen Realisierung einer Kraftmessung mittels einer Messspule führt:

$$F(t) = \frac{C}{\mu_0 A_L}\left(\frac{1}{N_{MS}}\int_0^t u(t')dt'\right)^2$$

($t$ - Zeit, $C$ - Luftspaltkorrekturfaktor, $N_{MS}$ - Windungszahl der Messpule, $u(t)$ - induzierte Spannung in der Messspule)

Die Integration der induzierten Spannung kann digital mit einem in der Regel im System schon vorhandenen Mikrocontroller ausgeführt werden. Somit ist die Kraft zu jedem Zeitpunkt der Ansteuerung bekannt.

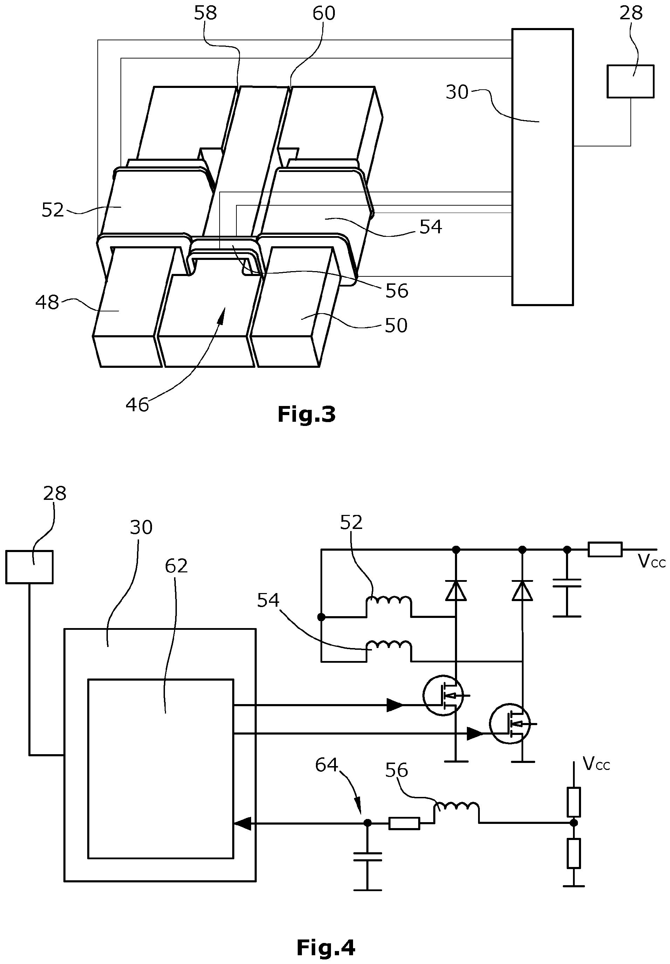

Fig. 3 zeigt den Aktuator 32 in perspektivischer Ansicht. Dieser Aktuator 32 ist als Doppelelektromagnet ausgebildet, dessen Antriebselement 34 als Anker 46, der zwischen einem ersten Stator 48 und einem zweiten Stator 50 angeordnet ist, in zwei entgegengesetzten Richtungen längs der Wirkbewegungsachse 38 Kraft aufbauen kann.

Der erste und der zweite Stator 48, 50 sind am Gehäuse 26 befestigt, während der Anker 46 mit dem Bedienelement 12 fest verbunden ist. Der erste Stator 48 weist eine erste Erregerspule 52 auf, während der zweite Stator 50 mit einer zweiten Erregerspule 54 versehen ist. Der Anker 46 ist von einer Messspule 56 umgeben. Beidseitig des Ankers 46 befindet sich jeweils ein erster bzw. ein zweiter Luftspalt 58, 60. Da die auf den Anker 46 wirkende Kraft jeweils in eine Richtung gerichtet sein soll, werden die Erregerspulen 52, 54 entsprechend nicht gleichzeitig, sondern abwechselnd bestromt. Mit dem Aufbau der Messspule 56 am Anker 46 wird eine genaue und kostengünstige Kraftmessung in beiden Wirkrichtungen längs der Wirkbewegungsachse 38 ermöglicht.

Die Ansteuerung und die Auswertung der in der Messspule 56 induzierten Spannung können beispielhaft mittels eines Mikrocontrollers 62 erfolgen, der Teil der Auswerte- und Ansteuereinheit 30 sein kann. Ein Beispiel für eine Beschaltung mit dem Mikrocontroller 62 ist in Fig. 4 gezeigt. Die induzierte Spannung in der Messspule 56 wird zunächst durch einen einfachen Tiefpass 64 geglättet, um die PWM-Taktung (Frequenz in der Regel > 20 kHz) zur wechselweisen Ansteuerung der beiden Erregerspulen 52, 54 aus dem Messsignal zu eliminieren. Danach erfasst der Mikrocontroller 62 die induzierte Spannung und integriert sie digital. Die Grenzfrequenz des Tiefpasses 64 sollte ausreichend höher als die höchsten Frequenzanteile des Kraftverlaufs liegen.

## BEZUGSZEICHENLISTE

| | |
|---|---|
| 10 | Bedieneinheit |
| 12 | Bedienelement |
| 14 | Bedienoberfläche des Bedienelements |
| 16 | Symbolfelder |
| 18 | Vertikalbewegungsachse des Bedienelements |
| 20 | Lateralbewegungsachse des Bedienelements |
| 22 | Federelemente |
| 24 | Federelemente |
| 26 | Gehäuse |
| 28 | Sensor |
| 30 | Ansteuereinheit |
| 32 | Aktuator |
| 34 | Antriebselement des Aktuators |
| 36 | Statorteil des Aktuators |
| 38 | Wirkbewegungsachse des Aktuators |
| 40 | Massenschwerpunkt des Bedienelements |
| 42 | Federwirkachse |
| 44 | Ebene |
| 46 | Anker |
| 48 | Stator |

50    Stator
52    Erregerspule
54    Erregerspule
56    Messspule
58    Luftspalt
60    Luftspalt
62    Mikrocontroller
64    Tiefpass

**Patentansprüche**

1. Bedieneinheit für ein Fahrzeug, insbesondere Infotainment-System zur Steuerung diverser Fahrzeugkomponenten, mit

   - einem Gehäuse (26) mit einer Vorderseite
   - einem an der Vorderseite des Gehäuses (26) angeordneten Bedienelement (12), das einen Massenschwerpunkt (40) und eine Bedienoberfläche (14) aufweist,
   - wobei das Bedienelement (12) an und/oder in dem Gehäuse (26) längs einer zur Bedienoberfläche (14) im Wesentlichen orthogonal verlaufenden Vertikalbewegungsachse (18) und längs einer im Wesentlichen quer dazu verlaufenden Lateralbewegungsachse (20) federelastisch gelagert ist,
   - mindestens einem Sensor (28) zur Erfassung einer Betätigungsbewegung des Bedienelements (12) in Richtung der Vertikalbewegungsachse (18),
   - einem in und/oder an dem Gehäuse (26) angeordneten Aktuator (32) zur Rückmeldebewegung des Bedienelements (12) zumindest auch in der Lateralbewegungsachse (20) bei einer erkannten Betätigungsbewegung des Bedienelements (12), wobei der Aktuator (32) ein ansteuerbares, mit dem Bedienelement (12) mechanisch gekoppeltes Antriebselement (34) aufweist, das längs einer Wirkbewegungsachse (38) vor- und zurückbewegbar ist, und
   - einer Auswerte- und Ansteuereinheit (30), die mit dem Sensor (28) und dem Aktuator (32) verbunden ist,
   **dadurch gekennzeichnet, dass**
   - die Wirkbewegungsachse (38) des Antriebselements (34) in einem spitzen Winkel sowohl zur Vertikalbewegungsachse (18) als auch zur Lateralbewegungsachse (20) des Bedienelements (12) angeordnet ist und
   - der Massenschwerpunkt (40) des Bedienelements (12) auf der Wirkbewegungsachse (38) des Antriebselements (34) des Aktuators (32) liegt.

2. Bedieneinheit nach Anspruch 1, **dadurch gekennzeichnet, dass** die Lateralbewegungsachse (20) des Bedienelements (12) und die Wirkbewegungsachse (38) des Antriebselements (34) des Aktuators (32) eine gemeinsame, im Wesentlichen orthogonal zur Bedienoberfläche (14) stehende Vertikalebene aufspannen.

3. Bedieneinheit nach Anspruch 2, **dadurch gekennzeichnet, dass** das Gehäuse (26) unterhalb des Bedienelements (12) einen Bauraum aufweist und dass der Aktuator (32) zur Erzielung eines kleinstmöglichen Winkels zwischen der Wirkbewegungsachse (38) des Antriebselements (34) des Aktuators (32) und der Lateralbewegungsachse (20) des Bedienelements (12) so nah wie bauraumbedingt möglich unterhalb des Bedienelements (12) und/oder so weit wie bauraumbedingt möglich von dem Massenschwerpunkt (40) des Bedienelements (12) entfernt angeordnet ist.

4. Bedieneinheit nach einem der Ansprüche 1 bis 3, **gekennzeichnet durch** beidseitig des Bedienelements (12) angeordnete Rückholfederelemente (24) für das Bedienelement (12) mit Federwirkachsen (42), die auf der Lateralbewegungsachse (20) oder auf der oder parallel zu der Wirkbewegungsachse (38) des Antriebselements (34) des Aktuators (32) liegen oder die in einer Ebene (44) liegen, die im Wesentlichen orthogonal zur von der Wirkbewegungsachse (38) des Antriebselements (34) des Aktuators (32) und der Lateralbewegungsachse (20) des Bedienelements (12) aufgespannten Ebene ist, sowie symmetrisch zur Lateralbewegungsachse (20) angeordnet sind.

**Claims**

1. An operating unit for a vehicle, in particular an infotainment system for operating various vehicle components, having

   - a housing (26) having a front face,
   - an operating element (12) arranged on said front face of said housing (26), which comprises a center of gravity (40) and an operating surface (14),
   - wherein said operating element (12) is spring-elastically mounted at and/or in said housing (26) along a vertical movement axis (18) essentially extending orthogonally to said operating surface (14) and along a lateral movement axis (20) essentially extending transversely with respect thereto,
   - at least one sensor (28) for detecting an actuation movement of said operating element (12) in the direction of the vertical movement axis (18),
   - an actuator (32) mounted in and/or at said housing (26) for a feedback movement of said operating element (12) at least also in the lateral movement axis (20) in the case of a recognized actuation movement of said operating element (12), wherein said actuator (32) comprises a drive element (34) adapted to be controlled and mechanically coupled with said operating element (12), which is adapted to be moved forwards and backwards along an effective movement axis (38), and

- an evaluation and control unit (30) which is connected to said sensor (28) and said actuator (32),

**characterized in that**

- said effective movement axis (38) of said drive element (34) is arranged in an acute angle to the vertical movement axis (18) and to the lateral movement axis (20) of said operating element (12), and

- said center of gravity (40) of said operating element (12) lies on said effective movement axis (38) of said drive element (34) of said actuator (32).

2. The operating unit according to claim 1, **characterized in that** the lateral movement axis (20) of the operating element (12) and the effective movement axis (38) of the drive element (34) of the actuator (32) span a common vertical plane which extends essentially orthogonally to the operating surface (14).

3. The operating unit according to claim 2, **characterized in that** the housing (26) comprises an installation space beneath the operating element (12), and that for achieving the smallest possible angle between the effective movement axis (38) of the drive element (34) of the actuator (32) and the lateral movement axis (20) of said operating element (12) said actuator (32) is arranged as near as possible beneath said operating element (12) as allowed by the installation space and/or as far away as possible from the center of gravity (40) of said operating element (12) as allowed by the installation space.

4. The operating unit according to any one of claims 1 to 3, **characterized by** return spring elements (24) having effective spring axes (42) for the operating element (12) arranged on both sides of said operating element (12) which lie on the lateral movement axis (20) or on the or in parallel to the effective movement axis (38) of the drive element (34) of the actuator (32) or which lie in a plane (44) that is essentially orthogonal to the plane spanned by said effective movement axis (38) of said drive element (34) of said actuator (32) and said lateral movement axis (20) of said operating element (12) and are arranged symmetrically to said lateral movement axis (20).

**Revendications**

1. Unité de commande pour un véhicule, en particulier système multimédia, pour le pilotage de divers composants du véhicule, dotée

   - d'un boîtier (26) avec une face avant
   - d'un élément de commande (12) agencé sur la face avant du boîtier (26), laquelle comporte un centre de gravité (40) et une surface de commande (14),
   - dans laquelle l'élément de commande (12) est disposé de manière élastique sur et/ou dans le boîtier (26) le long d'un axe de mouvement vertical (18) essentiellement orthogonal à la surface de commande (14) et le long d'un axe de mouvement latéral (20) essentiellement transversal à celle-ci,
   - d'au moins un capteur (28) pour saisir un mouvement d'actionnement de l'élément de commande (12) dans la direction de l'axe de mouvement vertical (18),
   - d'un actionneur (32) agencé dans et/ou sur le boîtier (26) pour un mouvement de rétroaction de l'élément de commande (12) au moins également dans l'axe de mouvement latéral (20) lors d'un mouvement d'actionnement détecté de l'élément de commande (12), dans laquelle l'actionneur (32) comporte un élément d'entraînement (34) pilotable et couplé mécaniquement à l'élément de commande (12), lequel peut être avancé et reculé le long d'un axe de mouvement opérant (38), et
   - d'une unité de contrôle et de pilotage (30), laquelle est raccordée au capteur (28) et à l'actionneur (32),

   caractérisé en ce

   - l'axe de mouvement opérant (38) de l'élément d'entraînement (34) est agencé à angle aigu aussi bien avec l'axe de mouvement vertical (18) qu'avec l'axe de mouvement latéral (20) de l'élément de commande (12) et
   - le centre de gravité (40) de l'élément de commande (12) est situé sur l'axe de mouvement opérant (38) de l'élément d'entraînement (34) de l'actionneur (32).

2. Unité de commande selon la revendication 1, **caractérisée en ce que** l'axe de mouvement latéral (20) de l'élément de commande (12) et l'axe de mouvement opérant (38) de l'élément d'entraînement (34) de l'actionneur (32) décrivent un plan vertical commun, essentiellement orthogonal à la surface de commande (14).

3. Unité de commande selon la revendication 2, **caractérisée en ce que** le boîtier (26) comporte en dessous de l'élément de commande (12) un espace d'installation et **en ce que** l'actionneur (32) est agencé pour obtenir un angle le plus petit possible entre l'axe de mouvement opérant (38) de l'élément d'entraînement (34) de l'actionneur (32) et l'axe de mouvement latéral (20) de l'élément de commande (12), aussi près que possible avec l'espace d'installation en dessous de l'élément de commande (12) et/ou aussi éloigné que possible avec l'espace d'installation du centre de gravité (40) de l'élément de commande (12).

4. Unité de commande selon l'une des revendications 1 à 3, **caractérisée par** des éléments de ressort de maintien (24de l'élément de commande (12), agencés de chaque côté de l'élément de commande (12), dotés d'axes d'action de ressort (42), lesquels se trouvent sur l'axe de mouvement latéral (20) ou sur l'axe de mouvement opérant (38) de l'élément d'entraînement (34) de l'actionneur (32) ou parallèles à celui-ci ou se trouvent dans un plan (44) essentiellement orthogonal au plan décrit par l'axe de mouvement latéral (20) de l'élément de commande (12) et l'axe de mouvement opérant (38) de l'élément d'entraînement (34) de l'actionneur (32) et sont également agencés de manière symétrique par rapport à l'axe de mouvement latéral (20).

**Fig.1**

**Fig.2**

**Fig.3**

**Fig.4**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102008035907 A
- DE 102009007243 A
- DE 10043805 A
- DE 102012221107 B
- DE 102013006414 A
- US 20140218324 A